Europäisches Patentamt

European Patent Office

Office européen des brevets

(19)

(11) Numéro de publication : **0 070 762**
**B1**

(12) FASCICULE DE BREVET EUROPÉEN

(45) Date de publication du fascicule du brevet :
26.03.86

(21) Numéro de dépôt : **82401277.7**

(22) Date de dépôt : **06.07.82**

(51) Int. Cl.⁴ : **B 60 K 20/16**

(54) **Dispositif de commande électronique d'une boîte de vitesses manuelle ou automatique.**

(30) Priorité : **22.07.81 FR 8114268**

(43) Date de publication de la demande :
**26.01.83 Bulletin 83/04**

(45) Mention de la délivrance du brevet :
**26.03.86 Bulletin 86/13**

(84) Etats contractants désignés :
**DE GB IT**

(56) Documents cités :
**DE-A- 2 700 962**
**FR-A- 1 576 649**
**US-A- 3 983 405**
**US-A- 4 148 231**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Menard, Christian**
**10, rue de Leon**
**F-78310 Maurepas (FR)**
Inventeur : **Marouby, Daniel**
**9, rue Joseph Bertrand**
**F-78220 Viroflay (FR)**

(74) Mandataire : **Fabien, Henri**
**PEUGEOT SA. DAT / BPI 18, rue des Fauvelles**
**F-92250 La Garenne-Colombes (FR)**

## Description

L'invention concerne un dispositif de commande électronique d'une boîte de vitesses manuelle ou automatique comportant plusieurs rapports de marche avant et au moins un rapport de marche arrière.

Un dispositif selon l'invention s'applique à la commande d'une boîte de vitesses du genre dans lequel les différents états de la boîte sont obtenus par la commande d'un nombre p d'électrovannes, p étant supérieur au nombre n de rapports, autorisant le passage d'un fluide sous pression qui détermine le serrage d'organes de freinage ou de couplage en rotation d'éléments de la boîte et en particulier de trains d'engrenages épicycloïdaux.

Dans ce genre de boîte de vitesses chaque état est obtenu par l'activation d'une ou plusieurs des électrovannes, les autres étant désactivées.

Le passage d'un premier état à un deuxième état s'effectuera donc en désactivant les électrovannes participant au premier état mais non au deuxième et en activant celles qui participent au deuxième état mais non au premier. Si l'ensemble des électrovannes qui doivent être activées pour obtenir un troisième état est uniquement composé d'électrovannes dont certaines sont activées dans le premier état et les autres dans le deuxième état, il est généralement nécessaire de temporiser le serrage des organes de couplage participant à la fois au deuxième et au troisième état, ceci pour éviter un passage transitoire non désiré dans le troisième état. On y parvient, soit par une temporisation hydraulique du passage, soit par des moyens électroniques temporisant la commande des électrovannes concernées.

On connaît par exemple par le brevet US-A-4.148231 un dispositif de commande électronique d'une boîte de vitesses automatique comportant une pluralité (n) de rapports de marche avant et au moins un rapport de marche arrière, du type dans lequel les différents états de la boîte sont obtenus par la commande d'une pluralité (P) d'électrovannes agissant sur des organes de freinage ou de couplage en rotation d'éléments de la boîte, la séquence de commande des électrovannes permettant d'obtenir un état donné de la boîte étant élaborée par des moyens logiques à partir de signaux de commande dont l'état logique 1 ou 0 correspond pour chacun à la commande de cet état, ce dispositif comportant des moyens de décodage binaire élaborant à partir de l'état logique des signaux de commande, la valeur 0 ou 1 de chaque bit d'un signal logique qui, appliqué aux entrées d'un circuit logique, fournit en sortie un mot de plusieurs bits, dont le nombre (P) de bits est le même que le nombre d'électrovannes et dont l'état 0 ou 1 de chaque bit est respectivement appliqué à une entrée du moyen de commande de puissance d'une des électrovannes.

L'invention a pour but des perfectionnements aux dispositifs de commande électronique du type ci-dessus en vue d'améliorer leur fiabilité de fonctionnement et les possibilités de réglage des temps de changement de rapport.

Un dispositif selon l'invention se caractérise en ce que le circuit logique est une mémoire morte et le signal logique élaboré par les moyens de décodage binaire constitue l'adresse appelant dans la mémoire morte le mot de plusieurs bits et en ce que l'entrée du circuit de commande de puissance d'au moins une électrovanne comporte un circuit logique ET dont une entrée reçoit l'état 0 ou 1 du bit affecté à la commande de cette électrovanne et une autre entrée un signal logique 1 différé par un moyen de temporisation déclenché par les moyens de décodage binaire simultanément à l'adressage du mot mémoire.

Chaque mot mémoire est ainsi représentatif de l'état dans lequel doit se trouver chaque électrovanne pour que l'état commandé soit réalisé quel que soit l'état précédent et le délai de temporisation de serrage est compté à partir de l'instant où l'ordre de désactivation des électrovannes participant à l'état précédent est effectivement donné.

Selon une forme de réalisation préférée les moyens logiques de type binaire comportent un comparateur comparant le nombre binaire N1 de n bits composé par les n signaux de commande des rapports de marche avant pris dans une séquence correspondant à l'ordre successif des n rapports et de la valeur N2 prise par un compteur décompteur à n bits incrémenté ou décrémenté sous le contrôle du comparateur jusqu'à ce que N2 soit égal à N1, des premiers moyens logiques délivrant en fonction de N2 au moins n bits de l'adresse du mot mémoire et des deuxièmes moyens logiques délivrant, en fonction des changements de position d'un levier sélection marche avant/point mort/marche arrière et de N2 les autres bits de l'adresse mémoire.

Grâce à cette disposition le passage d'un rapport à un autre s'effectue toujours en passant par les rapports intermédiaires.

Enfin pour la sécurité du fonctionnement il est avantageux de prévoir des moyens effectuant la remise à zéro du compteur décompteur et le retour au nombre N1 de plus faible valeur lors de tout changement de position du levier de sélection marche avant/point mort/marche arrière.

D'autres caractéristiques apparaîtront à l'examen de la description d'un exemple de réalisation illustré par les dessins annexés dans lesquels :

La figure 1   est un schéma synoptique général du dispositif.

La figure 2   est une représentation détaillée des premiers moyens logiques.

La figure 3   est une représentation détaillée des deuxièmes moyens logiques.

La figure 4   est un tableau de correspondance de N2 et N3 et des bits de l'adresse du mot mémoire déterminé par les premiers moyens logiques.

La figure 5   est un tableau de correspondance des adresses et du contenu mémoire.

La figure 6 est un exemple de réalisation d'un moyen de temporisation.

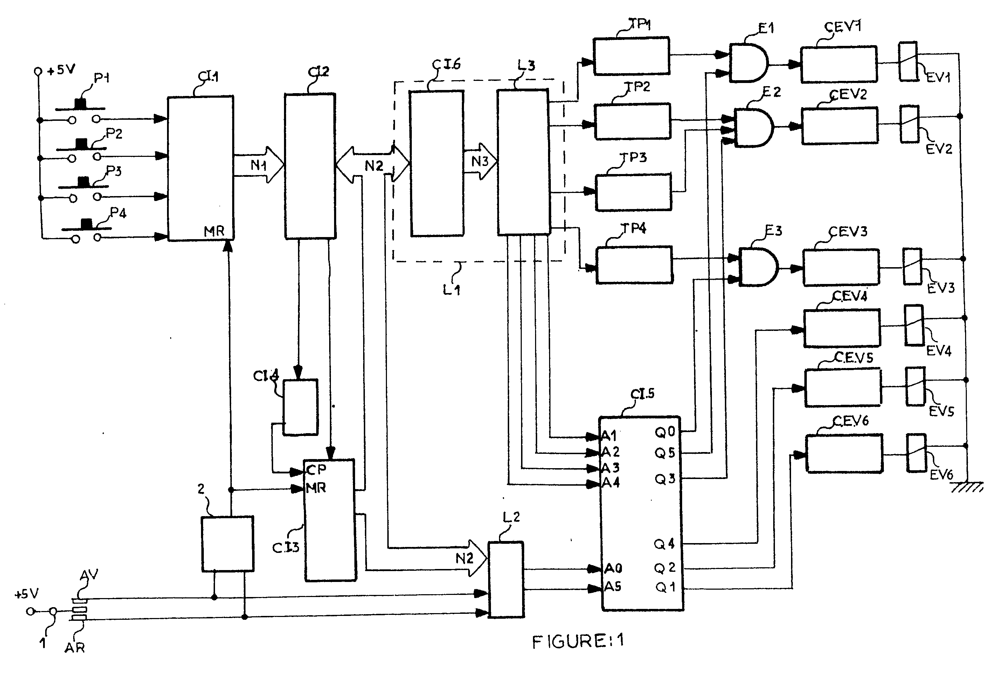

Le dispositif représenté à la Fig. 1 s'applique à la commande manuelle d'une boîte de vitesses à 4 rapports de marche avant et un rapport de marche arrière. La boîte de vitesses (non représentée) comporte 6 moyens de freinage ou de couplage en rotation d'éléments de trains épicycloïdaux. Chacun de ces moyens est contrôlé par une électrovanne EV1 à EV6 commandée par un moyen de commande de puissance respectivement CEV1 à CEV6. Le levier 1 de sélection marche avant/point mort/marche arrière étant placé en position AV, la commande d'un rapport de marche avant s'effectue par une pression sur l'un des 4 boutons poussoirs P1 à P4, respectivement affectés aux rapports 1 à 4.

La pression d'un bouton-poussoir génère une impulsion de commande à partir d'une source de tension continue + 5 v.

Cette source, obtenue de façon connue à partir d'une batterie, est utilisée pour l'alimentation (non représentée) des différents circuits intégrés composant le dispositif. Les impulsions de commande sont respectivement appliquées à l'une des 4 entrées d'un circuit intégré CI.1 à bascules prépositionnables monté en bascule D. Ce circuit peut être du type MC 14510 de la Société MOTOROLA. Selon l'impulsion de commande appliquée le circuit CI.1 bascule dans l'un des états suivants :

N1 = 0001 pour une impulsion générée par le bouton-poussoir P1,

N1 = 0010 pour une impulsion générée par le bouton-poussoir P2,

N1 = 0100 pour une impulsion générée par le bouton-poussoir P3,

N1 = 1000 pour une impulsion générée par le bouton-poussoir P4.

Un comparateur CI.2 compare le nombre binaire N1 représentant l'état commandé à un nombre binaire N2 de 4 bits délivré par un compteur décompteur CI.3. Le comparateur CI.2 peut être réalisé par un circuit MC 14585 de la Société MOTOROLA. Le compteur-décompteur CI.3 peut être réalisé à partir d'un circuit MC 14510 de la même Société.

Lorsque N1 est différent de N2 le comparateur CI.2 met en route un oscillateur CI.4 et positionne le compteur-décompteur en mode comptage ou en mode décomptage selon que N1 est supérieur ou inférieur à N2. Les oscillations de CI.4, utilisé comme horloge, sont appliquées à l'entrée comptage CP du compteur-décompteur CI.3. La valeur de N2 est donc incrémentée ou décrémentée au rythme de l'horloge selon le sens du résultat de la comparaison. Lorsque N2 est égal à N1 le comparateur arrête l'oscillateur CI.4. Tout changement de position du levier 1 entraîne la remise à 0 des sorties des circuits CI.1 et CI.2 (N1 = N2 = 0000) grâce au circuit 2 de remise à 0 qui élabore en fonction des changements d'état des lignes AV et/ou AR une impulsion de remise à 0 appliquée aux entrées MR des circuits CI.1 et CI.2.

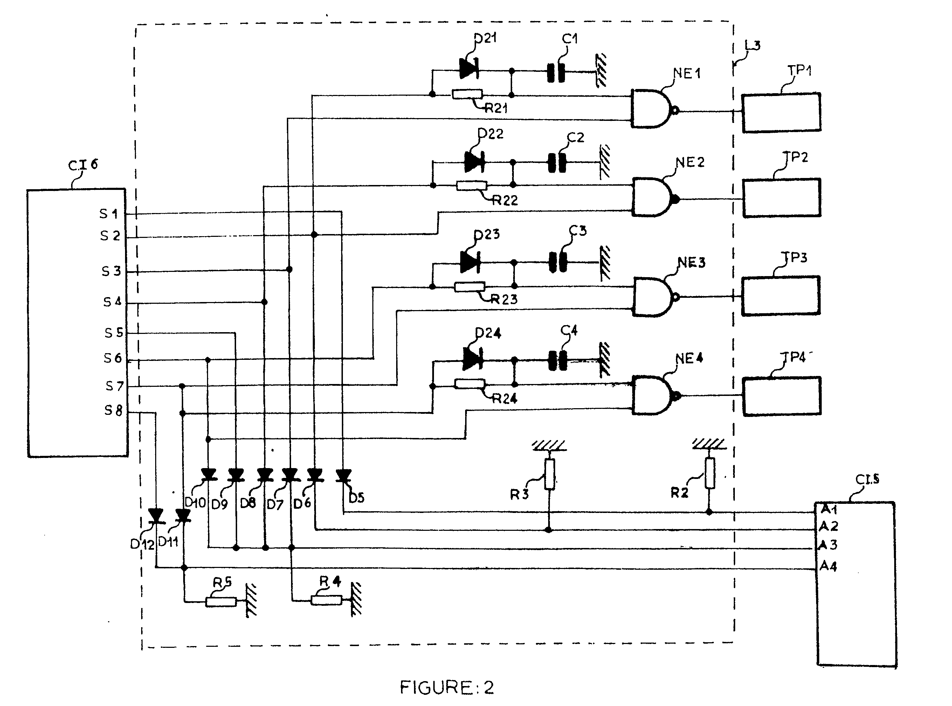

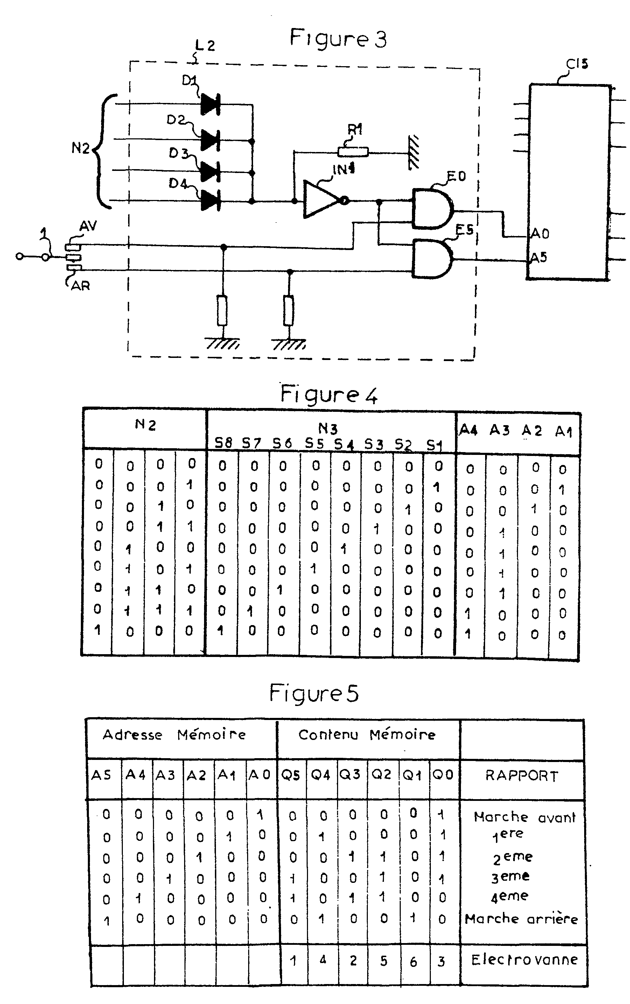

L'état de chacun des n bits du nombre binaire N2 est respectivement appliqué d'une part à l'une des n entrées de premiers moyens logiques L1 et d'autre part à l'une des entrées de deuxièmes moyens logiques L2. Les premiers moyens logiques L1 comportent un décodeur binaire CI.6 qui délivre en fonction du nombre binaire N2 un mot binaire N3 de m bits à un circuit logique L3 (avec m supérieur à n). Le décodeur binaire CI.6 est du type DCB (Décimal Codé Binaire) et peut être un MC 14028 de la Société MOTOROLA, le circuit logique L3 est détaillé en Fig. 2. La correspondance entre le nombre N2 et le mot N3 apparaît dans le tableau de la figure 4 (n = 4, m = 8). En fonction du mot N3 le circuit logique L3 délivre 4 bits A1, A2, A3 et A4 de l'adresse d'une mémoire morte CI.5. Des autres bits A0 et A5 de l'adresse à 6 bits d'un mot mémoire sont fournis par les moyens logiques L2. La mémoire CI.5 délivre sur ses sorties Q0 à Q5 les 6 bits d'un mot mémoire. Chaque bit Q0 à Q5 est affecté au contrôle d'un moyen de commande de puissance CEV1 à CEV6 des électrovannes EV1 à EV6. Bien entendu l'adresse et les mots de la mémoire CI.5 peuvent comporter plus de 6 bits, les bits superflus étant neutralisés.

Dans le cas des électrovannes EV4, EV5 et EV6 l'état du bit de commande (respectivement Q4, Q2 et Q1) est directement appliqué au moyen de commande de puissance de l'électrovanne. Ce moyen de puissance est un amplificateur à commande logique, réalisé de façon connue, qui délivre à l'électrovanne le courant nécessaire à son activation lorsque le bit de commande qui lui est affecté est à l'état 1 et coupe ce courant lorsque le bit est à l'état 0.

Dans le cas des électrovannes EV1, EV2 et EV3 une condition supplémentaire est nécessaire. Les bits correspondants du mot mémoire, respectivement Q5, Q3 et Q0 sont appliqués à une entrée d'une porte logique ET, respectivement E1, E2 et E3, dont au moins une autre entrée reçoit un signal d'état logique 1 qui peut être différé par des moyens électroniques de temporisation Tp1 à Tp4.

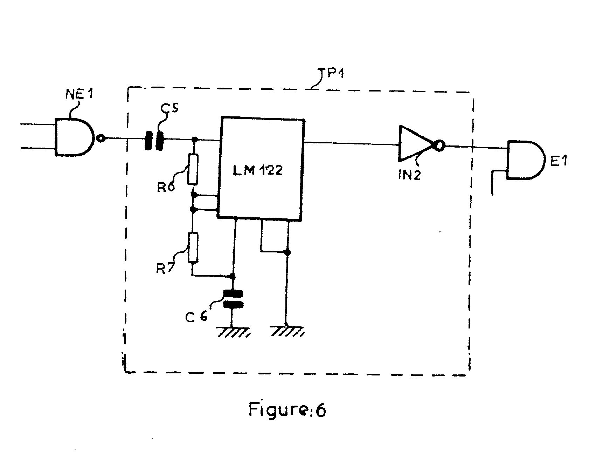

Les moyens de temporisation sont déclenchés par le circuit L3 en fonction des changements d'état du mot N3 selon une logique qui va être explicitée en référence au tableau de la Fig. 5 montrant la correspondance entre l'adresse et le mot mémoire délivré, chaque mot mémoire correspond à un état de la boîte obtenu par activation d'un groupe d'électrovannes, l'activation d'une même électrovanne pouvant intervenir pour plusieurs états. Par exemple l'électrovanne EV2 (bit de commande Q3) doit être activée pour obtenir le 2ème rapport et également pour obtenir le 4ème rapport. De ce fait lors d'un passage du 2ème rapport au 3ème rapport, il est nécessaire pour éviter un passage transitoire dans la configuration du 4ème rapport de n'activer l'électrovanne EV1 (bit de commande Q5) que lorsque l'électrovanne EV2 (bit de commande Q3) est effectivement désactivée.

Cette condition est réalisée de la manière suivante :

Le moyen de commande de puissance CEV1 est contrôlé par l'état logique 0 à 1 de la sortie de la porte E1. Une entrée de la porte E1 reçoit le bit Q5 et l'autre entrée un signal 0 ou 1 délivré par le moyen de temporisation Tp1. Lorsque le bit Q5 passe de l'état 0 à l'état 1 pour un passage du 2ème ou 3ème rapport, la sortie du moyen de temporisation Tp1 est initialisée à 0 et passe à 1 au terme d'un délai $\Delta t1$ et l'électrovanne EV1 est par conséquent activée.

De la même manière l'activation de l'électrovanne EV2 est temporisée par le moyen Tp2 pour le passage du 3ème ou 2ème rapport et par le moyen Tp3 pour le passage du 3ème ou 4ème rapport. Enfin l'électrovanne EV3 est temporisée par le moyen Tp4 pour le passage du 4ème ou 3ème rapport.

Les valeurs 0 ou 1 des bits A0 et A5 de l'adresse du mot mémoire sont déterminées par les moyens logiques L2 en fonction du nombre binaire N2 et de l'état 0 ou 1 de deux signaux AV et AR déterminés par la position du levier de sélection 1. Les 4 bits de N2 sont chacun appliqués à une entrée d'une porte OU constituée par les 4 diodes D1, D2, D3, et D4 et la résistance R1 (Fig. 3). Le signal de sortie de cette porte est inversé par un inverseur IN1 et appliqué à une entrée de chacune des portes ET, E0 et E5. La deuxième entrée de la porte E0 reçoit le signal AV (valeur 1 en marche avant et 0 en marche arrière et au point mort) et la deuxième entrée de la porte E5 reçoit le signal AR (valeur 1 en marche arrière et 0 en marche avant et au point mort). La sortie de la porte E0 donne le bit d'adresse A0, celle de la porte E5 le bit d'adresse A5. On voit que cette disposition confère aux bits A0 et A5, en fonction de l'état des moyens de commande, les valeurs du tableau de la Fig. 5.

On va maintenant décrire les moyens logiques L1 en référence à la Fig. 2. Les 8 sorties utilisées du décodeur CI.6, habituellement référencées Q1 à Q8, sont référencées S1 à S8 pour éviter les confusions avec les sorties Q de la mémoire CI.5. Les sorties S1 à S8 sont reliées aux entrées A1 à A4 de la mémoire CI.5 par les diodes D5 à D12 polarisées par les résistances R2 à R5 pour obtenir une logique conforme au tableau de la Fig. 4. L'ensemble des diodes D7 à D10 et la résistance R4 constituent une porte OU dont la sortie fournit le bit d'adresse A3 dont l'état est donc 1 si l'une au moins des sorties S3 à S6 est à l'état 1. Il en est de même pour les diodes D11 et D12 et la résistance R5, le bit d'adresse A4 est à 1 si l'une des sorties S7 ou S8 est à 1. L'état des bits d'adresse A1 et A2 correspond respectivement à celui des sorties S1 et S2.

Les moyens de temporisation Tp1 à Tp4 utilisent des circuits monostables par exemple du type LM122 de la Société National Semi Conductor montés avec un inverseur IN2 en sortie selon la Fig. 6 qui représente la temporisation Tp1 placée entre la porte NE1 et la porte E1. La durée de la temporisation est déterminée par le choix de C5, C6, R6 et R7. Lorsque l'entrée d'un moyen de temporisation est à l'état 1, sa sortie est elle-même à l'état 1. Lorsque l'entrée passe à l'état 0, la sortie passe à l'état 0 puis bascule à l'état 1 au terme du délai de temporisation $\Delta t$. Les délais de chaque temporisation peuvent être choisis de façon indépendante. La porte E2 (Fig. 1) à trois entrées est commandée par deux moyens de temporisation, ce qui permet de disposer de deux délais différents pour la commande de l'électrovanne EV2, l'un pour le passage du 3ème au 2ème rapport, l'autre pour le passage du 3ème au 4ème rapport. L'entrée de chaque temporisation Tp1 à Tp4 est reliée à la sortie d'une porte logique NON-ET respectivement NE1 à NE4. Une première entrée de chacune de ces portes est reliée directement à une première sortie Sn du décodeur CI.6, la deuxième entrée étant reliée à une deuxième sortie Sp du décodeur par une diode (respectivement D21 à D24) et à la masse par un condensateur (respectivement C1 à C4). Les diodes D21 à D24 sont shuntées par une résistance (respectivement R21 à R24). La mise en action d'une temporisation se fait de la manière suivante. La sortie d'une porte NE1 à NE4 est à l'état 0 si ses deux entrées sont à l'état 1, et à l'état 1 dans tous les autres cas. Comme il apparaît sur le tableau de la Fig. 4 lorsqu'une sortie Sn du décodeur est à l'état 1 toutes ses autres sorties sont à l'état 0.

En dehors de la période transitoire de basculement de l'état 1 d'une sortie Sn à une autre sortie Sp, les sorties des portes NE1 à NE4 sont donc à l'état 1 et les sorties des moyens de temporisation sont elles-mêmes à l'état 1.

Lorsqu'une sortie Sp reliée à une deuxième entrée d'une porte NON-ET passe de l'état 1 à l'état 0, cette deuxième entrée est maintenue à l'état 1 par la charge du condensateur. Si la première entrée de cette porte passe à l'état 1, alors la sortie de la porte NON-ET passe à l'état 0 et la temporisation correspondante est déclenchée.

Grâce à cette disposition la temporisation est mise en action, soit lors d'une incrémentation de N2 (montée des rapports), soit lors d'une décrémentation de N2 (descente des rapports), selon que les branchements Sn des premières entrées et Sp des deuxièmes entrées de la porte NON-ET correspondent à $n > p$ ou $n < p$. On voit sur les Fig. 2 et 4 que les temporisations Tp1, Tp2, Tp3 et Tp4 correspondant respectivement aux passages $2 \rightarrow 3, 3 \rightarrow 2, 3 \rightarrow 4, 4 \rightarrow 3$ sont mises en action par l'inversion de l'état 1 respectivement des sorties S2 et S3, S4 et S2, S6 et S7, S7 et S6. Il est clair à l'examen du tableau de la Fig. 4 que le déclenchement d'une temporisation, et donc de l'état 0 bloquant pendant le délai de temporisation la porte ET commandant l'activation de l'électrovanne correspondante, a lieu au plus tard au moment de l'adressage du mot mémoire correspondant à l'état commandé, provoquant la désactivation des électrovannes n'intervenant pas dans ce nouvel état.

Pour mieux faire comprendre le fonctionnement du dispositif, on va maintenant décrire une séquence complète de passage du 1er au 4ème rapport. Le positionnement du levier de sélection 1 en marche avant remet à 0 la bascule CI.1 et le compteur-décompteur CI.3. On a donc N1 = N2 = 0000 et N3 = 0000 0000. Le bit d'adresse A0 est mis à 1 par les moyens logiques L2 et le bit A5 à 0. En se référant aux tableaux des Fig. 4 et 5 on voit que seul le bit Q0 du mot mémoire est à 1, l'électrovanne EV3 est seule excitée. Une pression sur le bouton-poussoir P1 établit la séquence : N1 = 0001 ; incrémentation du compteur-décompteur CI.3 d'une unité d'horloge, d'où N2 = C001, N3 = 0000 0001, adresse = 000010, mot mémoire = 010001. L'excitation de l'électrovanne EV3 est maintenue et l'excitation de l'électrovanne EV4 provoque le passage du 1er rapport de marche avant. La temporisation Tp4 n'a pas fonctionné puisque les entrées de la porte NE4 sont branchées sur les sorties S7 et S6 du décodeur qui n'ont pas varié.

Supposons maintenant que l'on presse le bouton-poussoir P4 dont l'impulsion correspond à un ordre de passage au 4ème rapport. N2 sera alors incrémenté au rythme de l'oscillateur CI.4 jusqu'à ce qu'il atteigne la valeur de N1 soit 1000.

Après 1 cycle d'horloge N2 = 0010, N3 = 0000 0010, adresse = 000100, mot mémoire = 001101. Le passage de l'état 1 de la sortie S1 à la sortie S2 du décodeur ne commande aucune temporisation. Le 2ème rapport est obtenu par simultanément la désactivation de l'électrovanne .EV4 et l'activation des électrovannes EV2 et EV5.

Après 2 cycles d'horloges on a N2 = 0011, N3 = 0000 0100, adresse = 001000, mot mémoire = 100101. La temporisation Tp1 est déclenchée par le passage de l'état 1 de la sortie S2 à la sortie S3 du décodeur. L'électrovanne EV2 est désactivée par la mise à 0 du bit Q3 et l'électrovanne EV1 est activée au terme du délai de temporisation, ce qui provoque le passage du 3ème rapport. Les incrémentations suivantes de N2 jusqu'à la valeur 0110 ne provoquent pas de modification de l'adressage et donc du mot mémoire. Lorsque N2 = 0111 on obtient N3 = 01000 000, adresse = 010000, et mot mémoire = 101100. La temporisation Tp3 est déclenchée par le passage de l'état 1 de la sortie S6 à la sortie S7 du décodeur. L'électrovanne EV3 est désactivée par la mise à 0 du bit Q3 et l'électrovanne EV2 est activée au terme du délai de temporisation ce qui provoque le passage du 4ème rapport.

Le fonctionnement serait analogue si au lieu de monter les rapports, on voulait rétrograder. Le dispositif amène ainsi quel que soit l'écart entre le rapport précédemment enclenché et le rapport commandé, le passage successif de la boîte dans les rapports intermédiaires. La fréquence d'horloge est bien entendu choisie assez basse correspondant à un temps de cycle de 100 à 300 milli-secondes, pour assurer la compatibilité avec les temps de réaction du dispositif hydraulique à commander.

Dans le cas où le dispositif serait appliqué à la commande d'une boîte automatique, le nombre binaire N1 représentant l'état commandé serait élaboré de façon connue par des moyens de commande sensibles aux paramètres de fonctionnement du véhicule.

**Revendications**

1. Dispositif de commande électronique d'une boîte de vitesses manuelle ou automatique comportant une pluralité (n) de rapports de marche avant et au moins un rapport de marche arrière, du type dans lequel les différents états de la boîte sont obtenus par la commande d'une pluralité (p) d'électrovannes (EV1 à EV6) agissant sur des organes de freinage ou de couplage en rotation d'éléments de la boîte, la séquence de commande des électrovannes permettant d'obtenir un état donné de la boîte étant élaborée par des moyens logiques (L1, L2) à partir de signaux de commande dont l'état logique 1 ou 0 correspond pour chacun à la commande de cet état, des moyens de décodage binaire (CI.1, CI.2, CI.3, CI.4, L1, L2) élaborant, à partir de l'état logique des signaux de commande, la valeur 0 ou 1 de chaque bit d'un signal logique qui, appliqué aux entrées d'un circuit logique (C.I.5), fournit en sortie un mot de plusieurs bits dont le nombre (P) de bits est le même que le nombre d'électrovannes et dont l'état 0 ou 1 de chaque bit est respectivement appliqué à une entrée du moyen de commande de puissance (CEV1 à CEV6) d'une des électrovannes (EV1 à EV6), caractérisé en ce que le circuit logique (C.I.5) est une mémoire morte et le signal logique élaboré par les moyens de décodage binaire constitue l'adresse appelant dans la mémoire le mot de plusieurs bits et en ce que l'entrée du moyen de commande de puissance (CEV1 à CEV3) d'au moins une électrovanne (EV1 à EV3) comporte un circuit logique ET (E1 à E3) dont une entrée reçoit l'état 0 ou 1 du bit affecté à la commande de cette électrovanne et une autre entrée un signal logique 1 différé par un moyen de temporisation (Tp1 à Tp4) déclenché par les moyens de décodage binaire (CI.1, CI.2, CI.3, CI.4, L1, L2) simultanément à l'adressage du mot mémoire.

2. Dispositif selon la revendication 1 caractérisé en ce que les moyens de décodage binaire comportent un comparateur (CI.2) comparant le nombre binaire N1 de n bits composé par les n signaux de commande des rapports de marche avant pris dans une séquence correspondant à l'ordre successif des n rapports et de la valeur N2 prise par un compteur-décompteur (CI.3) à n bits incrémenté ou décrémenté sous le contrôle du comparateur jusqu'à ce que N2 soit égal à N1, des premiers moyens logiques (L1) délivrant en fonction de N2 au moins n bits de l'adresse du mot mémoire et des deuxièmes moyens logiques (L2) délivrant, en fonction des changements de position d'un levier de sélection (1)/marche avant/point mort/marche arrière et de N2, les autres bits de l'adresse du mot mémoire.

3. Dispositif selon la revendication 2 caractérisé en ce que les n signaux de commande des rapports de marche avant sont des impulsions commandant une bascule (Cl.1) délivrant le nombre binaire N1 dont l'état 1 de chaque bit, dans l'ordre successif des n rapports, correspond à la commande d'un rapport, les autres bits étant alors à l'état 0.

4. Dispositif selon la revendication 2 ou la revendication 3 caractérisé en ce que le compteur-décompteur (Cl.3) est incrémenté ou décrémenté au rythme d'une horloge (Cl.4) mise en route par le comparateur (Cl.2) lorsque N2 est différent de N1 et arrêtée dès que N2 est égal à N1.

5. Dispositif selon l'une quelconque des revendications 2 à 4 caractérisé en ce qu'il comporte des moyens (2) effectuant la remise à 0 du compteur-décompteur (Cl.3) et le retour au nombre N1 de plus faible valeur lors de tout changement de position du levier de sélection (1) marche avant/point mort/marche arrière.

6. Dispositif selon l'une quelconque des revendications 2 à 5 caractérisé en ce que les premiers moyens logiques (L3) comportent un décodeur binaire (Cl.6) délivrant à partir des n bits du mot N2 un mot N3 de m bits, m étant supérieur à n, et un circuit logique (L1) combinant les m bits pour fournir simultanément au moins n bits de l'adresse de la mémoire (Cl.5) et les signaux de commande des moyens de temporisation (Tp1 à Tp4).

7. Dispositif selon la revendication 6 caractérisé en ce que le décodeur binaire (Cl.6) est du type DCB (Décimal Codé Binaire).

8. Dispositif selon la revendication 6 ou la revendication 7 caractérisé en ce que chaque moyen de temporisation (Tp1 à Tp4) est déclenché par le passage à l'état 0 de la sortie d'une porte logique NON-ET (NE1 à NE4) dont une première entrée est reliée directement à une première sortie Sn du décodeur binaire (Cl.6) et la deuxième entrée à une deuxième sortie Sp du décodeur binaire (Cl.6) par une diode (D21 à D24) et à la masse par un condensateur (C1 à C4), les diodes (D21 à D24) étant shuntées par une résistance (R21 à R24).

**Claims**

1. Device for the electronic control of a manual or automatic gearbox comprising a plurality (n) of forward gear ratios and at least one reverse ratio, of the king in which the different states of the gearbox are obtained by the actuation of a plurality (p) of electromagnetic valves (EV1 to EV6) acting on members for the deceleration or the coupling in rotation of elements of the gearbox, the sequence of actuation of the electromagnetic valves making it possible to obtain a given state of the gearbox being established by logic means (L1, L2) from control signals of which the logic state 1 or 0 corresponds for each to the activation of this state, binary decoding means (Cl.1, Cl.2, Cl.3, Cl.4, L1, L2) deriving from the logic state of the control signals, the value 0 or 1 of each bit of a logic signal which, upon being fed to the inputs of a logic circuit (Cl.5), provides an output word of several bits of which the number of bits (P) is the same as the number of electromagnetic valves and of which the state 0 or 1 of each bit is respectively fed to an input of the power control device (CEV1 to CEV6) of one of the electromagnetic valves (EV1 to EV6), characterised in that the logic circuit (Cl.5) is a read only memory and the logic signal developed by the binary decoding means forms the address for calling the word of several bits in the memory and in that the input of the power control device (CEV1 to CEV3) of at least one electromagnetic valve (EV1 to EV3) comprises a logic AND circuit (E1 to E3) of which one input receives the state 0 or 1 of the bit allocated for actuation of this electromagnetic valve and another input receives a logic signal 1 delayed by a time-delay means (Tp1 to Tp4) triggered by the binary decoding means (Cl.1, Cl.2, Cl.3, Cl.4, L1, L2) simultaneously with the addressing of the word stored.

2. Device according to claim 1, characterised in that the binary decoding means comprise a comparator (Cl.2) comparing the binary number N1 of n bits made up by the n actuation signals of the forward gear ratios taken in a sequence corresponding to the successive order of the n gear ratios, and of the value N2 taken by an adder-subtractor (Cl.3) for n bits incremented or decremented under control by the comparator until N2 is equal to N1, first logic means (L1) supplying at least n bits of the address of the word stored as a function of N2, and second logic means (L2) supplying the other bits of the address of the word stored as a function of the changes of position of a forward/neutral/reverse selector level (1), and of N2.

3. Device according to claim 2, characterised in that the control signals for the forward gear ratios are pulses operating a flip flop (Cl.1) supplying the binary number N1 of which the state 1 of each bit corresponds, in the successive order of the n ratios, to the actuation of one gear ratio, the other bits then being in the state 0.

4. Device according to claim 2 or claim 3, characterised in that the adder-subtractor (Cl.3) is incremented or decremented at the rate of a clock (Cl.4) placed in operation by a comparator (Cl.2) when N2 differs from N1 and stopped as soon as N2 is equal to N1.

5. Device according to any one of claims 2 to 4, characterised in that it comprises means (2) performing the zero reset of the adder-subtractor (Cl.3) and the reversion to the number N1 of lower value at each change of position of the forward/neutral/reverse selector lever (1).

6. Device according to any one of claims 2 to 5, characterised in that the first logic means (L3) comprise a binary decoder (Cl.6) which from the n bits of the word N2 derives a word N3 of m bits, m exceeding n, and a logic circuit (L1) combining the m bits so that at least n bits of the address of the memory (Cl.5) and the actuating signals of the time-delay means (Tp1 to Tp4) may be provided simultaneously.

7. Device according to claim 6, characterised in that the binary decoder (Cl.6) is of the DCB (decimal coded binary) type.

8. Device according to claim 6 or claim 7, characterised in that each time-delay means (Tp1 to Tp4) is triggered by the change to the state 0 of the output of a NAND logic gate (NE1 to NE4) of which a first input is connected directly to a first output Sn of the binary decoder (Cl.6) and the second input is connected to a second output Sp of the binary decoder (Cl.6) via a diode (D21 to D24) and to earth via a capacitor (C1 to C4), the diodes (D21 to D24) being shunted by a resistor (R21 to R24).

## Patentansprüche

1. Elektronische Anlage zum Steuern eines handbedienten oder automatischen Getriebes, umfassend eine Anzahl (n) von Vorwärtsgängen und zumindest einen Rückwärtsgang von dem Typ, bei dem die verschiedenen Zustände des Getriebes durch die Steuerung einer Anzahl (P) von Magnetventilen (EV1 bis EV6) erhalten werden, die auf Brems- oder Drehkupplungsorgane von Elementen des Getriebes wirken, wobei die Steuerungssequenz der Magnetventile es gestattet, einen gegebenen Zustand des Getriebes zu erhalten, der durch logische Mittel (L1, L2) aufgrund von Steuersignalen erzeugt wird, deren logischer Zustand 1 oder 0 jeweils der Steuerung dieses Zustandes entspricht, Mittel zur Binärdecodierung (Cl.1, Cl.2, Cl.3, Cl.4, L1, L2), die aufgrund des logischen Zustands der Steuersignale den Wert 0 oder 1 jedes Bit eines logischen Signals erzeugen, das, an die Eingänge einer logischen Schaltung (C.l.5) angelegt, am Ausgang ein Wort mit mehreren Bit liefert, bei dem die Bit-Zahl (P) gleich der Magnetventil-Zahl ist und bei dem der Zustand 0 oder 1 eines jeden Bit jeweils an einen Eingang des Leistungssteuerungsmittels (CEV1 bis CEV6) eines der Magnetventile (EV1 bis EV6) angelegt wird, dadurch gekennzeichnet, daß die logische Schaltung (C.l.5) ein Festspeicher ist und das durch die Binärdecodierungsmittel erzeugte logische Signal die Adresse bildet, die im Speicher das Wort mit mehreren Bit aufruft, und daß der Eingang des Leistungssteuerungsmittels (CEV1 bis CEV3) von zumindest einem Magnetventil (EV1 bis EV3) eine logische Schaltung UND (E1 bis E3) aufweist, bei der ein Eingang den Zustand 0 oder 1 des der Steuerung dieses Magnetventils zugeordneten Bits aufnimmt und ein anderer Eingang ein logisches Signal 1, das durch ein Verzögerungsmittel (Tp1 bis Tp4) verzögert ist, das durch die Binärdecodierungsmittel (Cl.1, Cl.2, Cl.3, Cl.4, L1, L2) gleichzeitig mit der Adressierung des Speicherworts ausgelöst wird.

2. Anlage nach Anspruch 1, dadurch gekennzeichnet, daß die Binärdecodierungsmittel einen Komparator (Cl.2) umfassen, der die Binärzahl N1 mit n Bit, die aus den n Steuersignalen der Vorwärtsgänge zusammengesetzt ist, die in einer Sequenz entsprechend der sukzessiven Folge der n Gänge übernommen worden sind, und des Werts N2 vergleicht, der durch einen Zähler-Abwärtszähler (Cl.3) mit n Bit übernommen worden ist, der unter der Kontrolle des Komparators erhöht oder abwärts gezählt wird, bis N2 gleich N1 ist, wobei erste logische Mittel (L1) in Abhängigkeit von N2 zumindest n Bit der Adresse des Speicherworts liefern und zweite logische Mittel (L2) in Abhängigkeit der Positionsänderungen eines Wählhebels (1)/Vorwärtsgang/Leerlaufstellung/Rückwärtsgang und von N2 die anderen Bit der Adresse des Speicherworts liefern.

3. Anlage nach Anspruch 2, dadurch gekennzeichnet, daß die n Steuersignale der Vorwärtsgänge Impulse sind, die einen Umschalter (Cl.1) steuern, der die Binärzahl N1 liefert, deren Zustand 1 jedes Bits in der sukzessiven Folge der n Gänge der Steuerung eines Gangs entspricht, wobei die anderen Bit dann im Zustand 0 sind.

4. Anlage nach Anspruch 2 oder Anspruch 3, dadurch gekennzeichnet, daß der Zähler-Abwärtszähler (Cl.3) im Takt eines Zeitgebers (Cl.4) erhöht oder herabgezählt wird, der durch den Komparator (Cl.2) in Gang gesetzt wird, wenn N2 von N1 verschieden ist, und angehalten wird, sowie N2 gleich N1 ist.

5. Anlage nach einem beliebigen der Ansprüche 2 bis 4, dadurch gekennzeichnet, daß sie Mittel (2) aufweist, die die Rückstellung des Zählers-Abwärtszählers (Cl.3) auf 0 und den Rücklauf zur Zahl N1 mit geringerem Wert bei jeder Positionsänderung des Wählhebels 1 Vorwärtsgang/Leerlaufstellung/Rückwärtsgang bewirken.

6. Anlage nach einem beliebigen der Ansprüche 2 bis 5, dadurch gekennzeichnet, daß die ersten logischen Mittel (L3) einen Binärdecodierer (Cl.6), der aufgrund der n Bit des Worts N2 ein Wort N3 mit m Bit liefert, wobei m größer als n ist, und eine logische Schaltung (L1) aufweisen, die die m Bit kombiniert, um gleichzeitig zumindest n Bit der Adresse des Speichers (Cl.5) und die Steuersignale der Verzögerungsmittel (Tp1 bis Tp4) zu liefern.

7. Anlage nach Anspruch 6, dadurch gekennzeichnet, daß der Binärdecodierer (Cl.6) vom Typ BCD (binärverschlüsselte Dezimalziffer) ist.

8. Anlage nach Anspruch 6 oder Anspruch 7, dadurch gekennzeichnet, daß jedes Verzögerungsmittels (Tp1 bis Tp4) durch den Durchgang zum Zustand 0 des Ausgangs einer logischen Torschaltung NEIN-UND (NE1 bis NE4) ausgelöst wird, bei der ein erster Eingang direkt mit einem ersten Ausgang Sn des Binärdecodierers (Cl.6) verbunden ist und der zweite Eingang über eine Diode (D21 bis D24) mit einem zweiten Ausgang Sp des Binärdecodierers (Cl.6) und über einen Kondensator (C1 bis C4) mit Erde, wobei parallel zu den Dioden (D21 bis D24) ein Widerstand (R21 bis R24) geschaltet ist.

FIGURE:1

FIGURE: 2

0 070 762

## Figure 3

## Figure 4

| N2 | | | | N3 | | | | | | | | A4 | A3 | A2 | A1 |
|---|---|---|---|---|---|---|---|---|---|---|---|---|---|---|---|
| | | | | S8 | S7 | S6 | S5 | S4 | S3 | S2 | S1 | | | | |
| 0 | 0 | 0 | 0 | 0 | 0 | 0 | 0 | 0 | 0 | 0 | 0 | 0 | 0 | 0 | 0 |
| 0 | 0 | 0 | 1 | 0 | 0 | 0 | 0 | 0 | 0 | 0 | 1 | 0 | 0 | 0 | 1 |
| 0 | 0 | 1 | 0 | 0 | 0 | 0 | 0 | 0 | 0 | 1 | 0 | 0 | 0 | 1 | 0 |
| 0 | 0 | 1 | 1 | 0 | 0 | 0 | 0 | 0 | 1 | 0 | 0 | 0 | 1 | 0 | 0 |
| 0 | 1 | 0 | 0 | 0 | 0 | 0 | 0 | 1 | 0 | 0 | 0 | 0 | 1 | 0 | 0 |
| 0 | 1 | 0 | 1 | 0 | 0 | 0 | 1 | 0 | 0 | 0 | 0 | 0 | 1 | 0 | 0 |
| 0 | 1 | 1 | 0 | 0 | 0 | 1 | 0 | 0 | 0 | 0 | 0 | 0 | 1 | 0 | 0 |
| 0 | 1 | 1 | 1 | 0 | 1 | 0 | 0 | 0 | 0 | 0 | 0 | 1 | 0 | 0 | 0 |
| 1 | 0 | 0 | 0 | 1 | 0 | 0 | 0 | 0 | 0 | 0 | 0 | 1 | 0 | 0 | 0 |

## Figure 5

| Adresse Mémoire | | | | | | Contenu Mémoire | | | | | | |
|---|---|---|---|---|---|---|---|---|---|---|---|---|
| A5 | A4 | A3 | A2 | A1 | A0 | Q5 | Q4 | Q3 | Q2 | Q1 | Q0 | RAPPORT |
| 0 | 0 | 0 | 0 | 0 | 1 | 0 | 0 | 0 | 0 | 0 | 1 | Marche avant 1ere |
| 0 | 0 | 0 | 0 | 1 | 0 | 0 | 1 | 0 | 0 | 0 | 1 | 2eme |
| 0 | 0 | 0 | 1 | 0 | 0 | 0 | 0 | 1 | 1 | 0 | 1 | 3eme |
| 0 | 0 | 1 | 0 | 0 | 0 | 1 | 0 | 0 | 1 | 0 | 1 | 4eme |
| 0 | 1 | 0 | 0 | 0 | 0 | 1 | 0 | 1 | 1 | 0 | 0 | 4eme |
| 1 | 0 | 0 | 0 | 0 | 0 | 0 | 1 | 0 | 0 | 1 | 0 | Marche arrière |
| | | | | | | 1 | 4 | 2 | 5 | 6 | 3 | Electrovanne |

3

Figure: 6